# EUROPEAN PATENT APPLICATION

(11) **EP 4 723 589 A1**
(43) Date of publication of application: **08.04.2026**
(21) Application number: 23939516.3
(22) Date of filing: 29.05.2023
(51) Int. Cl.: H04L 49/10

(54) **OPTICAL NODE DEVICE**

(71) Applicant: NTT, Inc., Tokyo 100-8116 (JP)
(72) Inventor: KIMURA Yasutaka, Musashino-shi, Tokyo 180-8585 (JP); KANI Junichi, Musashino-shi, Tokyo 180-8585 (JP); SHIBATA Naotaka, Musashino-shi, Tokyo 180-8585 (JP); KANEKO Shin, Musashino-shi, Tokyo 180-8585 (JP)
(74) Representative: Santarelli
(86) International application number: PCT/JP2023/019893
(87) International publication number: WO 2024/247036

(57) **Abstract**

There is provided an optical node device including: a first distribution unit that switches a path of light having a specific type; and a second distribution unit that switches a path of light which has a specific type and can be handled by the first distribution unit and a path of light which has a specific type and cannot be handled by the first distribution unit, in which the second distribution unit includes an optical output unit that outputs the input light to at least one path of a first path which passes through the first distribution unit or a second path which does not pass through the first distribution unit, and an N×k matrix optical switch that is provided on the second path, includes N (N is an integer equal to or larger than 1) ports and k (k is an integer equal to or larger than 2) ports, and outputs the light, which is input to any port of the N ports, from any port of the k ports to which another second distribution unit is connected, and the optical output unit outputs the input light to at least the first path in a case where an optical path in units of wavelengths is established between terminals, and outputs the input light to at least the second path in a case where an optical path in units of optical fibers is established.

## Description

### Technical Field

The present invention relates to an optical node device.

### Background Art

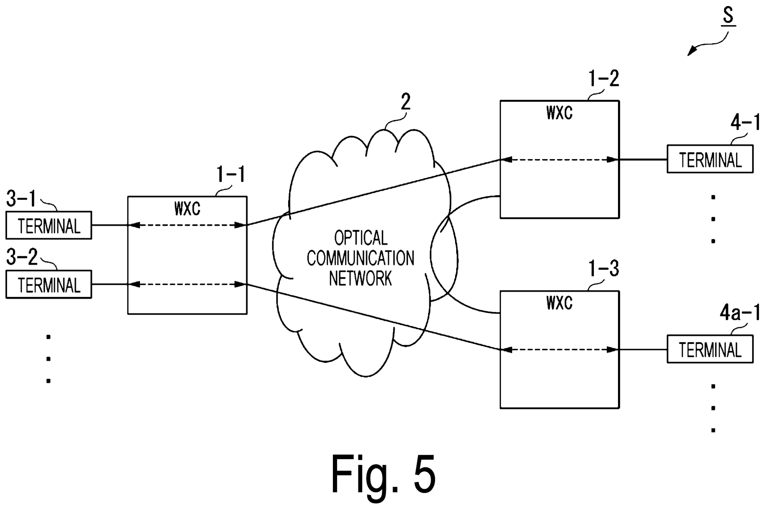

An all-photonics network has been proposed as a network that provides a network directly connecting end-points via an optical path (refer to, for example, Non Patent Literature 1). As an optical communication system to which such an all-photonics network is applied, for example, there is a configuration illustrated in Fig. 5. Fig. 5 is a diagram illustrating a configuration example of an optical communication system S to which the all-photonics network is applied. As illustrated in Fig. 5, the optical communication system S includes a plurality of wave-length cross-connects (WXCs) 1-1 to 1-3. The plurality of WXCs 1-1 to 1-3 are connected to each other via an optical communication network 2.

The configuration illustrated in Fig. 5 is a configuration in which path setting (optical distribution) in units of wavelengths is performed in the WXCs 1-1 to 1-3. By establishing an optical path in units of wavelengths between terminals in this manner, an optical path can be efficiently established. Fig. 5 illustrates a configuration in which an optical path in units of wavelengths is established between a terminal 3-1 and a terminal 4-1 and between a terminal 3-2 and a terminal 4a-1. In many cases, each of the WXCs 1-1 to 1-3 used in the optical communication system S is implemented by using a wavelength selective switch (WSS). However, the wavelength selective switch has a limit on an available wavelength width. Thus, the wavelength selective switch can be applied to a terminal that uses an optical signal having a narrow wavelength width, such as a digital coherent signal, but cannot be applied to a terminal that transmits and receives an optical signal which cannot be handled by the WSS, such as an optical signal having a wide wavelength width.

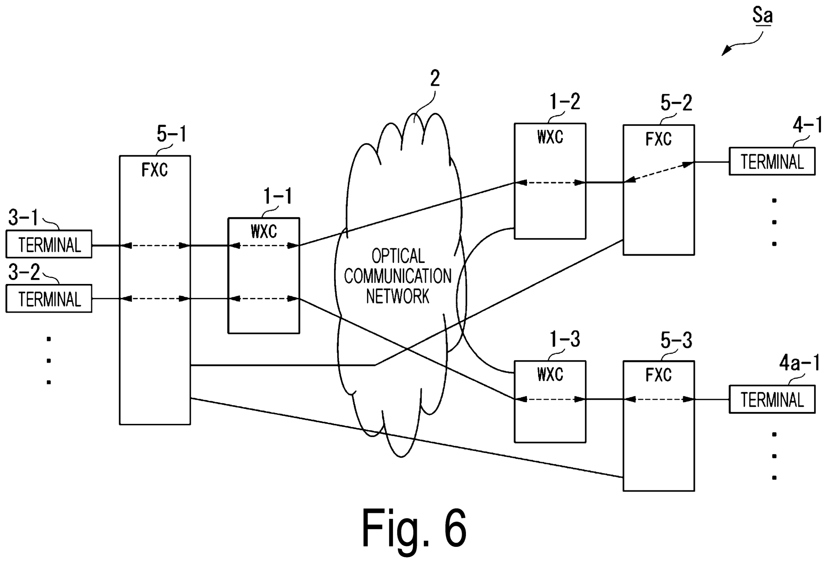

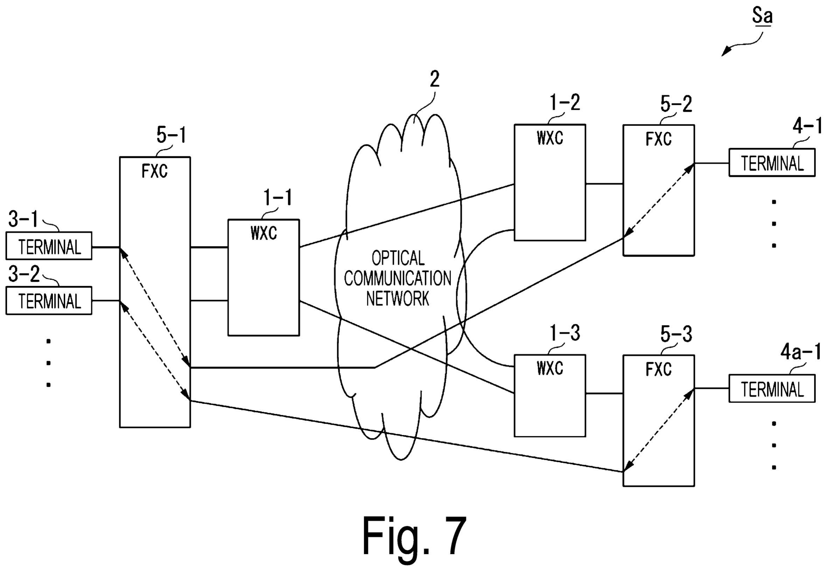

In order to solve such a problem, configurations as illustrated in Fig. 6 and Fig. 7 have been proposed. Fig. 6 and Fig. 7 are diagrams illustrating a configuration example of another optical communication system Sa to which the all-photonics network is applied. The optical communication system Sa further includes fiber cross connects (FXCs) 5-1 to 5-3 in addition to the configuration of Fig. 5. By providing the FXCs 5-1 to 5-3, in a case of an optical signal which has a wide wavelength width and of which the path cannot be switched by the wavelength selective switch, it is considered to switch a path of the optical signal in the FXCs 5-1 to 5-3 without passing through the WSS.

Thereby, in addition to establishment of the optical path in units of wavelengths, an optical path in units of fibers can also be established. As a result, a terminal using an optical signal having a narrow wavelength width and a terminal using an optical signal having a wide wavelength width which cannot be handled by the WSS can be used. Fig. 6 illustrates a configuration in which an optical path in units of wavelengths is established between a terminal 3-1 and a terminal 4-1 and between a terminal 3-2 and a terminal 4a-1, and Fig. 7 illustrates a configuration in which an optical path in units of optical fibers is established between a terminal 3-1 and a terminal 4-1 and between a terminal 3-2 and a terminal 4a-1.

### Citation List

### Non Patent Literature

Non Patent Literature 1: "Novel System Architecture toward the Realization of All-photonics Network", the Journal of Institute of Electronics, Information and Communication Engineers, Vol. 104 No. 5pp. 471-477.

### Summary of Invention

### Technical Problem

The configurations illustrated in Fig. 6 and Fig. 7 can be realized by preparing a large-scale matrix switch as a fiber cross connect (FXC). For example, as a general large-scale matrix switch used in the related art, there is an N×(N+k) matrix switch including N first ports and (N+k) second ports. N is an integer equal to or larger than 1, and k is an integer equal to or larger than 2. k corresponds to the maximum number of establishment of optical paths in units of fibers. In the related art, in a case where such a large-scale matrix switch is used, there has been a problem that a cost of the system for implementing the configurations illustrated in Fig. 6 and Fig. 7 greatly increases.

The present invention has been made in view of the above circumstances, an object of the present invention is to provide a technique capable of reducing a cost for implementing an optical communication system capable of both establishing an optical path in units of wavelengths and establishing an optical path in units of fibers.

### Solution to Problem

According to an aspect of the present invention, there is provided an optical node device including: a first distribution unit that switches a path of light having a specific type; and a second distribution unit that switches a path of light which has a specific type and can be handled by the first distribution unit and a path of light which has a specific type and cannot be handled by the first distribution unit, in which the second distribution unit includes an optical output unit that outputs the input light to at least one path of a first path which passes through the first distribution unit or a second path which does not pass through the first distribution unit, and an N×k matrix optical switch that is provided on the second path, includes N (N is an integer equal to or larger than 1) ports and k (k is an integer equal to or larger than 2) ports, and outputs the light, which is input to any port of the N ports, from any port of the k ports to which another second distribution unit is connected, and the optical output unit outputs the input light to at least the first path in a case where an optical path in units of wavelengths is established between terminals, and outputs the input light to at least the second path in a case where an optical path in units of optical fibers is established.

### Advantageous Effects of Invention

According to the present invention, it is possible to reduce a cost for implementing an optical communication system capable of both establishing an optical path in units of wavelengths and establishing an optical path in units of fibers.

### Brief Description of Drawings

[Fig. 1] A diagram illustrating a configuration example of an optical communication system according to a first embodiment.
[Fig. 2] A diagram illustrating a configuration example of an FXC according to the first embodiment.
[Fig. 3] A diagram illustrating a configuration example of an FXC according to a second embodiment.
[Fig. 4] A diagram illustrating a configuration example of a WXC according to the second embodiment.
[Fig. 5] A diagram illustrating a configuration example of an optical communication system to which an all-photonics network is applied.
[Fig. 6] A diagram illustrating a configuration example of another optical communication system to which an all-photonics network is applied.
[Fig. 7] A diagram illustrating a configuration example of still another optical communication system to which an all-photonics network is applied.

### Description of Embodiments

Hereinafter, embodiments of the present invention will be described with reference to the drawings.

### (First embodiment)

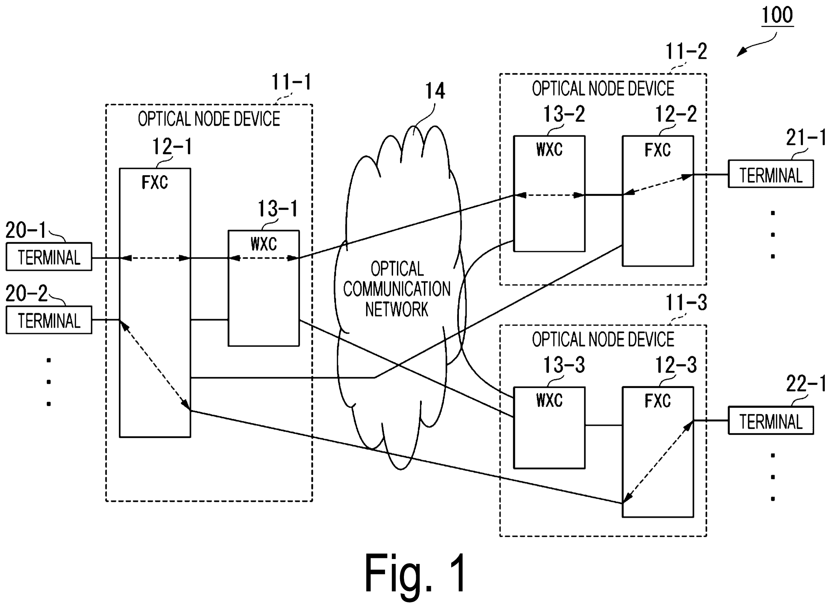

Fig. 1 is a diagram illustrating a configuration example of an optical communication system 100 according to a first embodiment. The optical communication system 100 includes a plurality of optical node devices 11. Fig. 1 illustrates a configuration in which the optical communication system 100 includes three optical node devices 11-1 to 11-3 as a plurality of optical node devices 11. On the other hand, the number of the optical node devices 11 is not particularly limited. The optical node devices 11-1 to 11-3 are connected to each other via an optical communication network 14. In the following description, the optical node devices 11-1 to 11-3 will be referred to as optical node devices 11 unless the optical node devices are distinguished from each other.

In Fig. 1, a plurality of terminals 20-1 and 20-2 are connected to the optical node device 11-1 via optical transmission lines, one or more terminals 21-1 are connected to the optical node device 11-2 via optical transmission lines, and one or more terminals 22-1 are connected to the optical node device 11-3 via optical transmission lines. The optical transmission line is a transmission path for transmitting an optical signal, and is, for example, an optical fiber. Note that the optical transmission line may include an optical amplifier.

Further, the optical node device 11-1 and the optical node device 11-2 are connected to each other via an optical transmission line, the optical node device 11-1 and the optical node device 11-3 are connected to each other via an optical transmission line, and the optical node device 11-2 and the optical node device 11-3 are also connected to each other via an optical transmission line.

The optical node device 11 is a device that transmits an optical signal transmitted from a certain terminal to another terminal. The optical node device 11 includes one or more FXCs 12 and one or more WXCs 13. The FXC 12 is an optical distribution device that includes N first ports and (N+k) second ports and outputs an optical signal input from a certain port to another port. The FXC 12 can handle a type of an optical signal that cannot be handled in the WXC 13 in addition to a type of an optical signal that can be handled in the WXC 13. Here, handling means processing (for example, path switching, and the like) of an input optical signal. The type of the optical signal is, for example, a wavelength width, a wavelength band, or an intensity of the optical signal. In this manner, the FXC 12 can switch a path of an optical signal having a type that cannot be handled in the WXC 13. The FXC 12 is an aspect of a second distribution unit.

The WXC 13 is an optical distribution device that includes N first ports and M second ports and outputs an optical signal input from a certain port to another port. M is an integer equal to or larger than 1. The WXC 13 may be configured with, for example, a plurality of optical switches and a plurality of wavelength selective switches (WSSes), or may be a multicast switch. The WXC 13 can switch a path of an optical signal having a specific wavelength width that can be used in the wavelength selective switch. Further, the WXC 13 can handle an optical signal having a specific wavelength band or an optical signal having a specific optical signal intensity in addition to an optical signal having a specific wavelength width. That is, the WXC 13 can also switch a path of an optical signal having a specific wavelength band or an optical signal having a specific optical signal intensity. The WXC 13 is an aspect of a first distribution unit.

Each of the terminals 20, 21, and 22 transmits an optical signal having a certain wavelength to a terminal of a communication partner. When viewed from the terminal 20, the terminals 21 and 22 are communication partner terminals, and when viewed from the terminal 21, the terminals 20 and 22 are communication partner terminals. When viewed from the terminal 22, the terminals 20 and 21 are communication partner terminals.

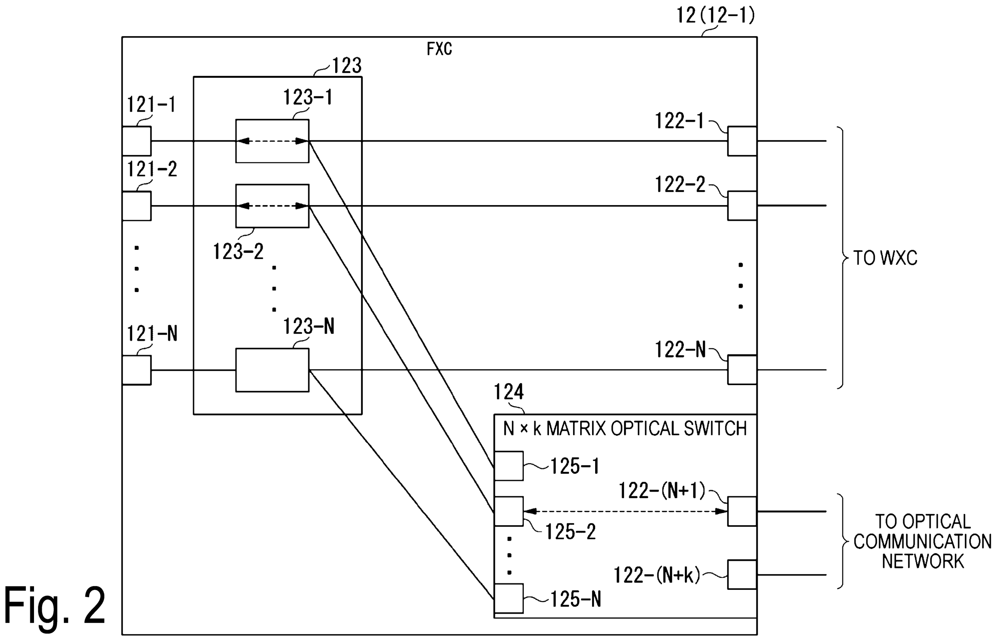

Fig. 2 is a diagram illustrating a configuration example of the FXC 12 according to the first embodiment. Fig. 2 illustrates a configuration of the FXC 12-1 as a configuration example of the FXC 12. Note that the FXCs 12-1 to 12-3 have the same configuration except for different layouts. The FXC 12 includes N ports 121-1 to 121-N, (N+k) ports 122-1 to 121-(N+k), an optical switch group 123, and an N×k matrix optical switch 124. Note that, among the ports 122-1 to 121-(N+k), k ports are provided in the N×k matrix optical switch 124. As described above, k is an integer equal to or larger than 1, and corresponds to the maximum number of establishment of optical paths in units of fibers.

The terminals 20 are connected to the ports 121-1 to 121-N via optical transmission lines. The optical signal that is transmitted from the terminal 20 and is input to the ports 121-1 to 121-N is output to the optical switch group 123. The optical signal that is output from the optical switch group 123 and is input to the ports 121-1 to 121-N is output to the terminal 20 via the optical transmission line.

The WXC 13 is connected to the ports 122-1 to 122-N via optical transmission lines. The optical signal that is output from the WXC 13 and is input to the ports 122-1 to 122-N is output to the optical switch group 123. The optical signal that is output from the optical switch group 123 and is input to the ports 122-1 to 122-N is output to the WXC 13.

The optical switch group 123 includes N 1×2 optical switches 123-1 to 123-N. Each of the 1×2 optical switches 123-1 to 123-N includes one first port and two second ports. In each of the 1×2 optical switches 123-1 to 123-N, the optical signal that is input to the first port is output from any one port of the two second ports. One of the two second ports is connected to any one of the ports 122-1 to 122-N, and the rest of the two second ports is connected to the N×k matrix optical switch 124. In the 1×2 optical switches 123-1 to 123-N, the connection between the first port and the second port is switched according to a control of a controller (not illustrated) or the like. The optical switch group 123 is an aspect of an optical output unit.

The N×k matrix optical switch 124 includes N ports 125-1 to 125-N and k ports 122-(N+1) to 122-(N+k). The 1×2 optical switches 123-1 to 123-N are connected to the ports 125-1 to 125-N via optical transmission lines. The other FXCs 12 are connected to the k ports 122-(N+1) to 122-(N+k) via an optical communication network. In the N×k matrix optical switch 124, the connection between any one port of the ports 125-1 to 125-N and any one port of the ports 122-(N+1) to 122-(N+k) is switched according to a control of the controller (not illustrated) or the like.

As illustrated in Fig. 2, as the FXC 12 according to the first embodiment, a matrix optical switch of which the size is reduced as compared with a configuration in the related art is used. Specifically, in the related art, an N×(N+k) matrix switch is used as the FXC. On the other hand, in the first embodiment, as the FXC 12, an N×k matrix switch is used.

The FXC 12 according to the first embodiment is configured to utilize the distribution function of the WXC 13 without utilizing the distribution function of the FXC 12 in a case of establishing an optical path in units of wavelengths (an optical signal passing through the WXC 13), and utilize the distribution function of the FXC 12 in a case of establishing an optical path in units of optical fibers (an optical signal not passing through the WXC 13).

Next, a flow of processing of establishing an optical path using the FXC 12 according to the first embodiment will be described with reference to Fig. 1 and Fig. 2. As an example, a procedure of establishing an optical path in units of wavelengths from the terminal 20-1 to the terminal 21-1 and a procedure of establishing an optical path in units of fibers from the terminal 20-2 to the terminal 22-1 will be described.

### (Procedure of establishing optical path in units of wavelengths)

First, a procedure of establishing an optical path in units of wavelengths from the terminal 20-1 to the terminal 21-1 will be described. Here, it is assumed that the terminal 20-1 is connected to the port 121-1 of the FXC 12-1 illustrated in Fig. 2. In the optical switch group 123, a connection destination of the 1×2 optical switch 123-1 connected to the port 121-1 is set as the port 122-1 toward the WXC 13-1, and thus, the terminal 20-1 and the WXC 13-1 are connected to each other. Thereafter, an optical communication network toward the terminal 21-1 is selected by a path switching function of the WXC 13-1.

Similar processing is also performed on the terminal 21-1 side, and thus, an optical path in units of wavelengths is established between the terminal 20-1 and the terminal 21-1. For example, in the optical switch group 123 in the FXC 12-2 to which the terminal 21-1 is connected, a connection destination of the 1×2 optical switch 123 connected to the port to which the terminal 21-1 is connected is set as the port 122 toward the WXC 13-2, and thus, the terminal 21-1 and the WXC 13-2 are connected to each other. Thereafter, an optical communication network toward the terminal 20-1 is selected by the path switching function of the WXC 13-2. Thereby, an optical path in units of wavelengths is established between the terminal 20-1 and the terminal 21-1.

### (Procedure of establishing optical path in units of fibers)

Next, a procedure of establishing an optical path from the terminal 20-2 to the terminal 22-1 in units of fibers will be described. Here, it is assumed that the terminal 20-2 is connected to the port 121-2 of the FXC 12-1 illustrated in Fig. 2. The optical switch group 123 switches a connection destination of the 1×2 optical switch 123-2 connected to the port 121-2 to the N×k matrix optical switch 124, and thus, the terminal 20-2 and the port 125-2 of the N×k matrix optical switch 124 are connected. An optical communication network toward the terminal 22-1 is selected by the path switching function of the N×k matrix optical switch 124.

Similar processing is also performed on the terminal 22-1 side, and thus, an optical path in units of fibers is established between the terminal 20-2 and the terminal 22-1. For example, in the optical switch group 123 in the FXC 12-3 to which the terminal 22-1 is connected, a connection destination of the 1×2 optical switch 123 connected to the port to which the terminal 22-1 is connected is set as the port 122 toward the N×k matrix optical switch 124, and thus, the terminal 22-1 and the port 125 of the N×k matrix optical switch 124 are connected to each other. An optical communication network toward the terminal 20-2 is selected by the path switching function of the N×k matrix optical switch 124. Thereby, an optical path in units of fibers is established between the terminal 20-2 and the terminal 22-1.

In the configuration described above, the 1×2 optical switches 123-1 to 123-N switch paths of the connection destinations of the terminals 20, 21, and 22 to paths passing through the WXC 13 or paths not passing through the WXC 13 (for example, paths passing through the N×k matrix optical switch 124). On the other hand, this switching may be performed based on the following criterion. In a case where a request from the terminal to the controller (not illustrated) is a request for an optical path in units of fibers, the 1×2 optical switches 123-1 to 123-N switch the connection between the ports such that a connection destination of the terminal as a request source is the N×k matrix optical switch 124. In a case where a request from the terminal to the controller (not illustrated) is a request for an optical path in units of wavelengths, the 1×2 optical switches 123-1 to 123-N switch the connection between the ports such that a connection destination of the terminal as a request source is the WXC 13. Note that this example is an example and switching may be performed by other methods.

According to the optical node device 11 configured as described above, the optical node device 11 includes the WXC 13 capable of switching the path of the light having a specific type, and the FXC 12 capable of switching the path of the light which has a specific type and can be handled by the WXC 13 and the path of the light which has a specific type and cannot be handled by the WXC 13. In addition, the FXC 12 includes the optical switch group 123 that outputs the input light to at least one of a first path passing through the WXC 13 and a second path not passing through the WXC 13, and the N×k matrix optical switch 124 that is provided on the second path, includes N ports and k ports, and outputs the light which is input to any one port of the N ports from any one port of the k ports to which the other FXCs 12 are connected. The optical switch group 123 outputs the input light to at least the first path in a case where an optical path in units of wavelengths is established between the terminals, and outputs the input light to at least the second path in a case where an optical path in units of optical fibers is established. As described above, the optical node device 11 performs distribution to utilize the distribution function (for example, the optical switch) of the WXC 13 in a case where an optical path in units of wavelengths is established, and performs distribution to utilize the distribution function (for example, the optical switch group 123) of the FXC 12 in a case where an optical path in units of fibers is established. Thereby, it is possible to both establish an optical path in units of wavelengths and establish an optical path in units of fibers. Since such distribution is performed, it is possible to reduce a size of the N×k matrix optical switch 124 used in the FXC 12. Therefore, it is possible to reduce a cost for implementing an optical communication system capable of both establishing an optical path in units of wavelengths and establishing an optical path in units of fibers.

Further, the optical node device 11 switches the connection between the ports in the optical switch group 123 to output the input light to the path to which the WXC 13 is connected in a case where an optical path in units of wavelengths is established between the terminals, and switches the connection between the ports in the optical switch group 123 to output the input light to the N×k matrix optical switch 124 in a case where an optical path in units of optical fibers is established. Thereby, it is possible to perform distribution to utilize the distribution function (for example, the optical switch) of the WXC 13 in a case where an optical path in units of wavelengths is established, and perform distribution to utilize the distribution function (for example, the optical switch group 123) of the FXC 12 in a case where an optical path in units of fibers is established. Therefore, it is possible to both establish an optical path in units of wavelengths and establish an optical path in units of fibers.

### (Second embodiment)

In the first embodiment, distribution for establishing an optical path is performed using an optical switch. On the other hand, in a second embodiment, a configuration in which distribution for establishing an optical path is not performed will be described. The entire configuration of the optical communication system 100 is similar to the configuration in the first embodiment. In the second embodiment, the configurations of the FXC 12 and the WXC 13 are different from the configurations in the first embodiment. Hereinafter, differences from the first embodiment will be mainly described.

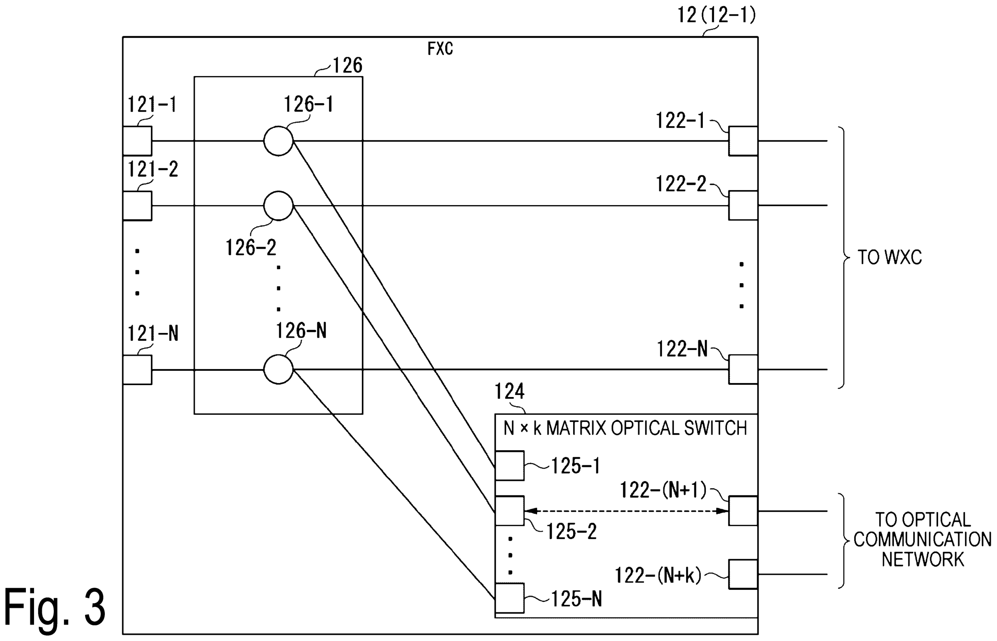

Fig. 3 is a diagram illustrating a configuration example of the FXC 12 according to the second embodiment. Fig. 3 illustrates a configuration of the FXC 12-1 as a configuration example of the FXC 12. Note that the FXCs 12-1 to 12-3 have the same configuration except for different layouts. The FXC 12 according to the second embodiment includes N ports 121-1 to 121-N, (N+k) ports 122-1 to 122-(N+k), an N×k matrix optical switch 124, and a power splitter group 126. Note that, among the ports 122-1 to 121-(N+k), k ports are provided in the N×k matrix optical switch 124.

The FXC 12 according to the second embodiment includes a power splitter group 126 instead of the optical switch group 123.

The power splitter group 126 includes N power splitters 126-1 to 126-N. Each of the power splitters 126-1 to 126-N includes one first port and two second ports. In each of the power splitters 126-1 to 126-N, the optical signal which is input to the first port is output from each of the two second ports. One of the two second ports is connected to any one of the ports 122-1 to 122-N, and the rest of the two second ports is connected to the N×k matrix optical switch 124. The power splitter group 126 is an aspect of an optical output unit.

Similarly to the first embodiment, the FXC 12 according to the second embodiment is configured to utilize the distribution function of the WXC 13 without utilizing the distribution function of the FXC 12 in a case of establishing an optical path in units of wavelengths (an optical signal passing through the WXC 13), and utilize the distribution function of the FXC 12 in a case of establishing an optical path in units of optical fibers (an optical signal not passing through the WXC 13).

### (Procedure of establishing optical path in units of wavelengths)

First, a procedure of establishing an optical path in units of wavelengths from the terminal 20-1 to the terminal 21-1 will be described. Here, it is assumed that the terminal 20-1 is connected to the port 121-1 of the FXC 12-1 illustrated in Fig. 3. The port 121-1 is connected to the port 122-1 toward the WXC 13-1 via the power splitter 126-1 connected to the port 121-1, and thus, the terminal 20-1 and the WXC 13-1 are connected to each other. Thereafter, an optical communication network toward the terminal 21-1 is selected by a path switching function of the WXC 13-1.

Note that the port 121-1 is also connected to the port 125-1 of the N×k matrix optical switch 124 via the power splitter 126-1. On the other hand, in a case where the port 125-1 of the N×k matrix optical switch 124 is not connected to anywhere, it is possible to block a signal directly toward the optical communication network 14 from the FXC 12-1 without passing through the WXC 13-1.

Similar processing is also performed on the terminal 21-1 side, and thus, an optical path in units of wavelengths is established between the terminal 20-1 and the terminal 21-1. For example, the port 121 is connected to the port 122 toward the WXC 13-2 via the power splitter group 126 in the FXC 12-2 to which the terminal 21-1 is connected, and thus, the terminal 21-1 and the WXC 13-2 are connected to each other. Thereafter, an optical communication network toward the terminal 20-1 is selected by the path switching function of the WXC 13-2. Thereby, an optical path in units of wavelengths is established between the terminal 20-1 and the terminal 21-1.

### (Procedure of establishing optical path in units of fibers)

Next, a procedure of establishing an optical path from the terminal 20-2 to the terminal 22-1 in units of fibers will be described. Here, it is assumed that the terminal 20-2 is connected to the port 121-2 of the FXC 12-1 illustrated in Fig. 3. The terminal 20-2 is connected to the N×k matrix optical switch 124 via a power splitter group 126-2 connected to the port 121-2. An optical communication network toward the terminal 22-1 is selected by the path switching function of the N×k matrix optical switch 124.

Similar processing is also performed on the terminal 22-1 side, and thus, an optical path in units of fibers is established between the terminal 20-2 and the terminal 22-1. For example, the terminal 22-1 is connected to the N×k matrix optical switch 124 via the power splitter group 126 in the FXC 12-3 to which the terminal 22-1 is connected. An optical communication network toward the terminal 20-2 is selected by the path switching function of the N×k matrix optical switch 124. Thereby, an optical path in units of fibers is established between the terminal 20-2 and the terminal 22-1.

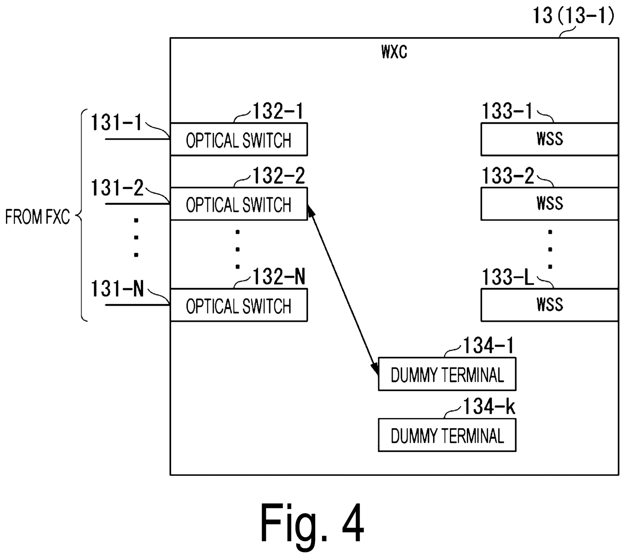

Note that, in a case where the power splitter is used as in the FXC 12 according to the second embodiment, the port 121 is also connected to the port 122 via the power splitter group 126. In the above example, the port 121-2 is also connected to the port 122-2 via the power splitter 126-2. Therefore, in order to prevent a signal from the WXC 13 from being mixed into the terminal 20-2 via the power splitter 126-2, and to prevent a signal having a wide wavelength width that cannot be handled by the WXC 13 from being mixed from the terminal 20-2, it is necessary to block in advance a signal toward the FXC 12 and a signal from the FXC 12, for the port of the WXC 13 connected to the port 122-2, before an optical path in units of fibers is established between the terminal 20-2 and the terminal 22-1. Note that the same applies to a case where an optical path in units of fibers is established between the other terminals 20, 21, and 22. A method of blocking a signal toward the WXC 13 and a signal from the WXC 13 at the port of the WXC 13 on the FXC 12 side will be described with reference to Fig. 4.

Fig. 4 is a diagram illustrating a configuration example of the WXC 13 according to the second embodiment. Fig. 4 illustrates a configuration of the WXC 13-1 as a configuration example of the WXC 13. Note that the WXCs 13-1 to 13-3 have the same configuration except for different layouts. The WXC 13 includes N ports 131-1 to 131-N, N optical switches 132-1 to 132-N, L wavelength selective switches 133-1 to 133-L, and K dummy terminals 134-1 to 134-k. L is an integer equal to or larger than 1.

The ports 122-1 to 122-N of the FXC 12 are connected to the ports 131-1 to 131-N via optical transmission lines. The optical signal that is output from the FXC 12 and is input to the ports 131-1 to 131-N is output to the optical switches 132-1 to 132-N. The optical signal that is output from the optical switches 132-1 to 132-N and is input to the ports 131-1 to 131-N is output to the FXC 12.

In each of the optical switches 132-1 to 132-N, an optical signal that is input from a certain port is output from another port. Each of the WSSes 133-1 to 133-N outputs an optical signal having a specific wavelength among the input optical signals. The WSSes 133-1 to 133-N are wavelength selective switches.

The dummy terminals 134-1 to 134-k are dummy terminals having no connection destination. The optical signal that is input to the dummy terminals 134-1 to 134-k is terminated.

For the sake of explanation using the above-described example, the port 122-2 of the FXC 12-1 and the port 131-2 of the WXC 13-1 are connected to each other. In this case, a connection destination of the optical switch 132-2 connected to the port 131-2 is set as the dummy terminal 134-1 or the dummy terminal 134-k, and thus, it is possible to block the signal toward the FXC 12 and the signal from the FXC 12, for the port of the WXC 13 on the FXC 12 side.

Although Fig. 4 illustrates an example in which the WXC 13 includes the optical switches 132 and the WSSes 133, the WXC 13 may include a multicast switch including a power splitter instead of the optical switches 132 and the WSSes 133. Also in this case, a connection destination of the multicast switch is set as the dummy terminal, and thus, it is possible to block a signal toward the FXC 12 and a signal from the FXC 12 in a similar manner.

In the optical node device 11 according to the second embodiment configured as described above, the effects similar to those of the first embodiment can be obtained. Further, in the optical node device 11 according to the second embodiment, the power splitter group 126 is used instead of the optical switch group 123, and thus, it is possible to reduce a cost as compared with the first embodiment.

Further, in the optical node device 11 according to the second embodiment, it is assumed that light flows into the WXC 13 even in a case where an optical path in units of optical fibers is established by the power splitter group 126. On the other hand, in the optical node device 11 according to the second embodiment, the WXC 13 includes the dummy terminal 134 that terminates light. Thereby, it is possible to block a signal toward the FXC 12 and a signal from the FXC 12.

Although embodiments of the present invention have been described in detail with reference to the drawings, the specific configuration is not limited to the embodiments, and includes design and the like within a range not departing from the gist of the present invention.

### Industrial Applicability

The present invention can be applied to optical communication systems.

### Reference Signs List

11, 11-1 to 11-3 Optical node device
12, 12-1 to 12-3 FXC
13, 13-1 to 13-3 WXC
20, 20-1 to 20-2, 21, 21-1, 22, 22-1 Terminal
100 Optical communication system
121, 121-1 to 121-N, 122, 122-1 to 122-(N+k), 125-1, 125-1 to 125-N, 125 Port
123 Optical switch group
123-1 to 123-N 1×2 optical switch
124 N×k matrix optical switch
126 Power splitter group
126-1 to 126-N Power splitter
132-1 to 132-N Optical switch
133-1 to 133-L WSS
134-1 to 134-k Dummy terminal

## Claims

1. An optical node device comprising:
a first distribution unit configure to switch a path of light having a specific type; and
a second distribution unit configure to switch a path of light which has a specific type and can be handled by the first distribution unit and a path of light which has a specific type and cannot be handled by the first distribution unit, wherein
the second distribution unit includes
an optical output unit configure to output the input light to at least one path of a first path which passes through the first distribution unit or a second path which does not pass through the first distribution unit, and
an N×k matrix optical switch configure to be provided on the second path, includes N (N is an integer equal to or larger than 1) ports and k (k is an integer equal to or larger than 2) ports, and output the light, which is input to any port of the N ports, from any port of the k ports to which another second distribution unit is connected, and
the optical output unit outputs the input light to at least the first path in a case where an optical path in units of wavelengths is established between terminals, and outputs the input light to at least the second path in a case where an optical path in units of optical fibers is established.

2. The optical node device according to claim 1, wherein
the optical output unit includes a plurality of 1×2 optical switches including one first port and two second ports, and
the optical output unit switches a connection between the ports to output the input light to the first path in a case where an optical path in units of wavelengths is established between terminals, and switches a connection between the ports to output the input light to the second path in a case where an optical path in units of optical fibers is established.

3. The optical node device according to claim 1, wherein
the optical output unit includes a plurality of power splitters, and
the optical output unit outputs the input light to the first path and the second path.

4. The optical node device according to claim 3, wherein
the first distribution unit includes a switch configure to output an input optical signal to a specific output destination, and one or more dummy terminals that terminate the input optical signal, and switches a connection destination of the switch to output the optical signal which is input from the first path to the one or more dummy terminals in a case where an optical path in units of optical fibers is established.

5. The optical node device according to any one of claims 1 to 4, wherein
the first distribution unit is a wave-length cross-connect (WXC), and the second distribution unit is a fiber cross connect (FXC).

6. The optical node device according to any one of claims 1 to 4, wherein
the type is any one of a wavelength width, a wavelength band, and an optical signal intensity.
